(19) **Europäisches Patentamt**

**European Patent Office**

**Office européen des brevets**

(11) **EP 0 875 737 B1**

(12) **EUROPÄISCHE PATENTSCHRIFT**

(45) Veröffentlichungstag und Bekanntmachung des Hinweises auf die Patenterteilung:
**06.08.2003** **Patentblatt 2003/32**

(51) Int Cl.[7]: **G01F 1/00**, G01F 1/66

(21) Anmeldenummer: **98106867.9**

(22) Anmeldetag: **16.04.1998**

(54) **Ultraschall-Durchflussmessverfahren**

Ultrasonic flow measurement

Mesure de débit à ultrasons

(84) Benannte Vertragsstaaten:
**BE CH DE DK FR GB IT LI NL**

(30) Priorität: **29.04.1997 DE 19717940**

(43) Veröffentlichungstag der Anmeldung:
**04.11.1998 Patentblatt 1998/45**

(73) Patentinhaber: **Krohne AG**
**4019 Basel (CH)**

(72) Erfinder:
• **van Bekkum, Jan A., Dr.**
**NL-4223 MG Hoornmar (NL)**
• **Smychliaev, Vladimir V., Dr.**
**NL-3328 DS Dordrecht (NL)**
• **Roskam, Abram K.**
**NL-4254 Sleewijk (NL)**

(74) Vertreter: **Gesthuysen, von Rohr & Eggert**
**Patentanwälte**
**Postfach 10 13 54**
**45013 Essen (DE)**

(56) Entgegenhaltungen:
**EP-A- 0 605 944** **EP-A- 0 639 776**
**WO-A-95/19559** **WO-A-97/19326**
**US-A- 4 078 428**

## Beschreibung

Die Erfindung betrifft ein Ultraschall-Durchflußmeßverfahren mit Hilfe eines Meßrohres und mindestens zweier am Meßrohr angeordneter, jeweils einen Meßpfad bildender Ultraschallwandlerpaare, wobei die Radialkomponenten mindestens zweier Meßpfade in bezug auf die Meßrohrachse voneinander abweichen und bei welchem der Meßwert für die Durchflußmenge eines strömenden Mediums aus der Geschwindigkeit des Mediums entlang mindestens zweier Meßpfade bestimmt wird.

Ausgangspunkt für die vorliegende Erfindung ist die Tatsache, daß die Strömungsverhältnisse in Rohrleitungen industrieller Anlagen in aller Regel bei weitem nicht ideal, sondern mehr oder weniger stark gestört sind. Als Störungen der Strömungsverhältnisse treten im wesentlichen auf Asymmetrien der axialen Geschwindigkeiten des Mediums über den Querschnitt einer Rohrleitung, Wirbel, also radiale Geschwindigkeitskomponenten des Mediums, und Druckwellen innerhalb des Mediums. Verursacht werden die Asymmetrien beispielsweise durch halb geschlossene Ventile oder andere Einbauten im Rohrleitungsquerschnitt, während die Wirbel im wesentlichen durch Krümmungen, insbesondere aufeinanderfolgende Krümmungen in unterschiedliche Ebenen, aber auch an T-Stücken innerhalb des Rohrleitungssystems entstehen. Auslöser für Druckwellen innerhalb des Mediums sind vor allem Pumpen, aber auch beispielsweise Veränderungen in den Öffnungszuständen von Ventilen innerhalb der angrenzenden Rohrleitung.

Die einfachsten Verfahren zur Ultraschall-Durchflußmessung arbeiten lediglich mit Hilfe nur eines am Meßrohr angeordneten, einen Meßpfad bildenden Ultraschallwandlerpaares. Bei diesen Ultraschall-Durchflußmeßverfahren wird der Meßwert für die Durchflußmenge des Mediums aus den Laufzeitdifferenzen der Ultraschallsignale entlang des Meßpfades stromaufwärts und stromabwärts bestimmt. Der Meßwert für die Durchflußmenge wird dabei über einen konstanten oder über einen von der Geschwindigkeit des Mediums entlang des Meßpfades abhängigen Korrekturfaktor aus der Geschwindigkeit des Mediums entlang des Meßpfades bestimmt. Bei einem derartigen Ultraschall-Durchflußmeßverfahren ist die Berücksichtigung der erwähnten Störungen der Strömungsverhältnisse nicht möglich.

In der nachveröffentlichten PCT/EP 96/05082 ist ein Ultraschall-Durchflußmeßverfahren offenbart, welches die Störung der Strömungsverhältnisse durch Asymmetrien der axialen Geschwindigkeiten des Mediums über den Querschnitt des Meßrohres im wesentlichen darüber kompensiert, daß am Meßrohr mindestens zwei einen Meßpfad bildende Ultraschallwandlerpaare angeordnet sind, daß aus den Werten für die Geschwindigkeit des Mediums entlang der Meßpfade die Reynoldssche Zahl bestimmt wird und anhand des Wertes für die Reynoldssche Zahl der Meßwert für die Durchflußmenge korrigiert wird. Auch dieses Verfahren läßt jedoch die Beeinträchtigung der Meßgenauigkeit durch Wirbel innerhalb des Mediums außen vor.

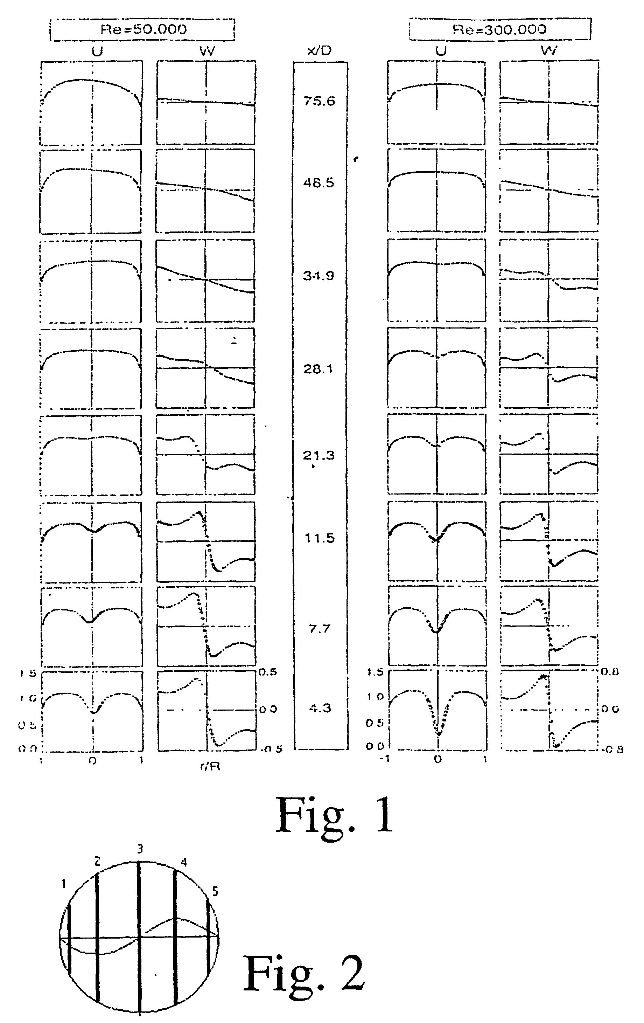

Gerade der Einfluß von Wirbeln innerhalb des Mediums stellt jedoch ein ganz erhebliches Problem im Hinblick auf die Meßgenauigkeit des Ultraschall-Durchflußmeßverfahrens dar. Besonders problematisch sind die Störungen der Strömungsverhältnisse durch Wirbel weil einerseits vorhandene Wirbel auch das Strömungsprofil des Mediums in axialer Richtung beeinflussen und andererseits sehr langsam abklingen. Diese erwähnten Eigenschaften der Wirbel sind aus den experimentell ermittelten Meßkurven in Fig. 1 der Zeichnung besonders deutlich ersichtlich. In Fig. 1 sind die Strömungsverhältnisse für strömende Medien mit Reynoldsschen Zahlen von 50.000 und 300.000 in Abhängigkeit von der Länge der Einlaufstrecke, bezogen auf den Durchmesser der Rohrleitung, dargestellt. U bezeichnet hier die axiale Geschwindigkeit des Mediums, abhängig von der Entfernung zur Meßrohrachse, während W die tangentiale Geschwindigkeit des Mediums, abhängig vom Abstand von der Meßrohrachse, bezeichnet. Man erkennt deutlich, daß die Wirbel auch nach einer dem ca. 80-fachen des Durchmessers der Rohrleitung entsprechenden Einlaufstrecke nicht vollständig abgeklungen sind. Abhängig von den jeweiligen Verhältnissen können Wirbel die Meßgenauigkeit auch nach einer Einlaufstrecke, die dem 100-fachen und mehr des Rohrleitungsdurchmessers entspricht, die Meßgenauigkeit noch deutlich beeinträchtigen (vgl. auch die Literaturstelle "Turbulent Pipe Flow with Swirl", Wiendelt Steenbergen, Eindhoven, Eindhoven University of Technology, 1995).

Um den Einfluß der Wirbel auf die Messung der Durchflußmenge eines Mediums zu reduzieren, ist unter anderem vorgeschlagen worden, in die Rohrleitung einen Strömungsgleichrichter einzusetzen. Ein solcher Strömungsgleichrichter ist jedoch dahingehend problematisch, daß er einerseits einen deutlichen Druckverlust verursacht und andererseits die Verwirbelungen nicht vollständig beseitigt. Auch können Strömungsgleichrichter nicht in Verbindung mit strömenden Medien eingesetzt werden, die einen gewissen Feststoffanteil aufweisen, da sich in einem solchen Fall der Strömungsgleichrichter innerhalb kurzer Zeit zusetzen würde.

Aus der EP 0 639 776 A1, von der die Erfindung ausgeht, ist ein Ultraschall-Durchflußmeßverfahren bekannt, bei dem der Einfluß der Wirbel innerhalb des Mediums auf den Meßwert für die Durchflußmenge dadurch reduziert wird, daß die Geschwindigkeiten des Mediums entlang zweier Meßpfade mit unterschiedlicher Empfindlichkeit gegenüber den Wirbeln gemessen wird. Die unterschiedlichen Empfindlichkeiten werden dadurch gewährleistet, daß die Radialkomponenten der Meßpfade, bezogen auf die Meßrohrachse, voneinander abweichen. Die Meßpfade verlaufen dabei derart, daß die Geschwindigkeiten entlang der Meßpfade identisch sind, wenn innerhalb des Meßrohres keine Wirbel vorhanden sind, während die Differenz der Geschwindigkeiten entlang der Meßpfade nicht verschwindet, wenn die Strömung Wirbel mit sich führt. Anhand dieser Differenz der Geschwindigkeiten wird bei dem bekannten Verfahren der Meßwert für die Durchflußmenge des Mediums durch das Meßrohr korrigiert. Das bekannte Verfahren ist in zweierlei Hinsicht problematisch. Zum einen weist die Differenz der Geschwindigkeiten des Mediums entlang der beiden Meßpfade mit unterschiedlicher Empfindlichkeit gegenüber Verwirbelungen, wie experimentell festgestellt wurde, eine ganz erhebliche Querempfindlichkeit gegenüber Störungen durch Druckwellen innerhalb des Mediums auf. Hier schafft auch die in der EP 0 639 776 A1 vorgeschlagene Erhöhung der Meßfrequenz keine Abhilfe. Da Störungen durch Druckwellen selbstverständlich eine andere Korrektur des Meßwertes für die Durchflußmenge erfordern als Störungen durch Wirbel, läßt sich anhand der im Stand der Technik bestimmten Differenz keine befriedigenden Korrektur des Meßwertes für die Durchflußmenge durchführen, wenn, wie es regelmäßig der Fall ist, gleichzeitig Druckwellen die Strömungsverhältnisse beeinträchtigen. Zum anderen sind Wirbel, die aus Fig. 1 ersichtlich, regelmäßig asymmetrisch. Eine solche Asymmetrie findet bei dem bekannten Verfahren zur Ultraschall-Durchflußmessung keine Berücksichtigung.

Ausgehend von dem erläuterten Stand der Technik liegt der Erfindung also die Aufgabe zugrunde, das bekannte Ultraschall-Durchflußmeßverfahren derart auszugestalten und weiterzubilden, daß eine Korrektur der Durchflußmenge derart durchführbar ist, daß die Meßgenauigkeit für die Durchflußmenge bei Strömungsverhältnissen, die durch Wirbel gestört sind, deutlich verbessert ist.

Die zuvor hergeleitete und aufgezeigte Aufgabe ist erfindungsgemäß dadurch gelöst, daß die Wirbelintensität im Medium aus den Geschwindigkeiten des Mediums entlang der Meßpfade bestimmt wird, in die Bestimmung der Wirbelintensität zumindest näherungsweise das Verhältnis zwischen Drehimpuls und Longitudinalimpuls des Mediums eingeht und der Meßwert für die Durchflußmenge anhand der Wirbelintensität korrigiert wird. Die erfindungsgemäße Berechnung der Wirbelintensität auf der Grundlage des Verhältnisses zwischen Drehimpuls und Longitudinalimpuls des Mediums eliminiert zunächst weitestgehend die Querempfindlichkeit des Wertes für die Wirbelintensität gegenüber Störungen der Strömungsverhältnisse durch Druckwellen. Demzufolge ist es mit dem erfindungsgemäß ausgestalteten Verfahren nunmehr möglich, eine saubere Korrektur des Meßwertes für die Durchflußmenge anhand der errechneten Wirbelintensität durchzuführen. Darüber hinaus berücksichtigt das U1-traschall-Durchflußmeßverfahren in erfindungsgemäßer Ausgestaltung auch Asymmetrien der Wirbel. Im Ergebnis läßt sich also anhand der erfindungsgemäß berechneten Wirbelintensität eine sehr gute Korrektur des Meßwertes für die Durchflußmenge trotz durch Wirbel gestörter Strömungsverhältnisse innerhalb des Mediums durchführen.

Da die Strömungsverhältnisse des Mediums in dem Meßrohr einer analytischen Betrachtung nur sehr schwer zugänglich sind, erfährt das erfindungsgemäße Verfahren eine weitere Verbesserung dadurch, daß die Korrektur des Meßwertes für die Durchflußmenge anhand der Wirbelintensität unter Verwendung einer auf empirischen Daten beruhenden Fehlerkurve durchgeführt wird. Eine solche empirische Fehlerkurve berücksichtigt einerseits vorhandene systematische Zusammenhänge und andererseits spezifische Eigenschaften einer Vorrichtung zur Verwirklichung des erfindungsgemäßen Verfahrens.

Es hat sich bei Experimenten gezeigt, daß es zur Kompensation der Störung der Strömungsverhältnisse durch Wirbel ausreicht, wenn der Drehimpuls des Mediums zumindest näherungsweise aus der Differenz oder der Summe mindestens zweier Differenzen der Geschwindigkeiten des Mediums entlang zweier Meßpfade mit in bezug auf die Meßrohrachse voneinander abweichenden Radialkomponenten bestimmt wird. Diese Bestimmung des Drehimpulses ist denkbar einfach und somit ohne großen apparativen Aufwand zu verwirklichen. Durch die Berücksichtigung der Summe mindestens zweier Differenzen wird der Fehler in der Bestimmung des Drehimpulses des Mediums reduziert.

Werden bei der zumindest näherungsweise Bestimmung des Drehimpulses des Mediums die Absolutwerte der Differenzen der Geschwindigkeiten des Mediums entlang zweier Meßpfade verwendet, so lassen sich die Differenzen der Geschwindigkeiten des Mediums entlang zweier Meßpfade anhand beliebiger Meßpfade in beliebiger Reihenfolge bestimmen.

Um auch die notwendige Bestimmung des Longitudinalimpulses des Mediums zu vereinfachen, wird das erfindungsgemäße Verfahren dadurch weitergebildet, daß der Longitudinalimpuls des Mediums zumindest näherungsweise aus der Geschwindigkeit des Mediums entlang eines Meßpfades oder der Summe der Geschwindigkeiten des Mediums entlang mehrerer Meßpfade bestimmt wird. Auch aus dieser Ausgestaltung des erfindungsgemäßen Verfahrens wird nochmals deutlich, daß es das erfindungsgemäße Verfahren mit sehr einfachen Ausgestaltungen ermöglicht, die Meßgenauigkeit deutlich zu verbessern. Auch die Berücksichtigung der Summe der Geschwindigkeiten führt zu einer erhöhten Meßgenauigkeiten für die Wirbelintensität.

Im einzelnen gibt es nun eine Vielzahl von Möglichkeiten, das erfindungsgemäße U1-traschall-Durchflußmeßverfahren auszugestalten und weiterzubilden. Dazu wird verwiesen einerseits auf die dem Patentanspruch 1 nachgeordneten Patentansprüche, andererseits auf die Beschreibung in Verbindung mit der Zeichnung. In der Zeichnung zeigt

Fig. 2        eine graphische Darstellung der tangentialen Geschwindigkeitskomponenten in einem Medium beim Vorhandensein eines symmetrischen Wirbels und die Projektion von Meßpfaden auf den Querschnitt eines Meßrohres,

Fig. 3    eine graphische Darstellung der Geschwindigkeiten des Mediums auf vier Meßpfaden bei einer Störung der Strömungsverhältnisse durch Druckwellen,

Fig. 4    eine graphische Darstellung der Verhältnisse des Einflusses von Störungen durch Druckwellen und Störungen durch Wirbel auf die erfindungsgemäß bestimmte Wirbelintensität,

Fig. 5 a), b)    eine graphische Darstellung einer Korrektur eines durch Wirbel gestörten Strömungsprofils bei der Bestimmung der Geschwindigkeiten des Mediums entlang von fünf Meßpfaden und

Fig. 6    eine graphische Darstellung einer empirischen Fehlerkurve zur Korrektur des Meßwertes für die Durchflußmenge.

Zunächst folgen einige theoretische Ausführungen zur Erläuterung der erfindungsgemäßen Lehre.

Für die Geschwindigkeit des Mediums entlang eines Meßpfades $U_m$, die ja die gemittelte Geschwindigkeit entlang dieses Meßpfades darstellt, gilt, daß diese eine Funktion des Verlaufes des Meßpfades, hier symbolisiert durch die Koordinate x relativ zum Radius $R$ des Meßrohres, der Reynoldsschen Zahl Re und der Wirbelintensität $S$ ist, d. h.:

$$U_m = f(\frac{x}{R}, \text{Re}, S) \qquad \text{Gl. 1}$$

Für die mittlere Geschwindigkeit $\bar{U}$ über den gesamten Querschnitt des Meßrohres gilt dann:

$$\bar{U} = \frac{2}{\pi R^2} \int\limits_{-R}^{R} 2\sqrt{R^2 - x^2}\, U_m(\frac{x}{R}, \text{Re}, S)\, dx \qquad \text{Gl. 2}$$

Da bei sämtlichen bekannten Ultraschall-Durchflußmeßverfahren die mittleren Geschwindigkeiten $U_m$ nur entlang einer begrenzten Anzahl von Meßpfaden bekannt ist, errechnet sich die mittlere Geschwindigkeit über den Querschnitt des Meßrohres praktisch wie folgt:

$$\bar{U} = \sum_{i=1}^{N} G_i U_{m_i} + \varepsilon(\text{Re}) + \delta(S) \qquad \text{Gl. 3}$$

wobei

$G_i$    der jedem Meßpfad zugeordnete Gewichtsfaktor ist,
$U_{m_i}$    die gemittelte Geschwindigkeit entlang des i-ten Meßpfades ist,
$\varepsilon(\text{Re})$    den Einfluß der Reynoldsschen Zahl beschreibt und
$\delta(S)$    den Einfluß der Wirbelintensität beschreibt.

Zur Behandlung von $\varepsilon(\text{Re})$ wird auf die nachveröffentlichte Anmeldung PCT/EP 96/05082 verwiesen.

Ziel der vorliegenden Erfindung ist es, den Einfluß $\delta(S)$ der Wirbelintensität im Medium auf die Meßgenauigkeit für $\bar{U}$ möglichst zu eliminieren. Zu diesem Zwecke ist es notwendig, erstens die Wirbelintensität $S$ zu bestimmen und zweitens ihren Einfluß auf die über den Gesamtquerschnitt des Meßrohres gemittelte Geschwindigkeit $\bar{U}$ zu ermitteln.

Der erfindungsgemäße Ansatz besteht darin, daß in die Bestimmung der Wirbelintensität im Medium zumindest näherungsweise das Verhältnis zwischen Drehimpuls und Longitudinalimpuls des Mediums eingeht. Entsprechend kann die Wirbelintensität $S$ wie folgt definiert werden:

$$S = \frac{M_{mn}}{J_{axial} \cdot R} = \frac{2\pi\rho \int\limits_{0}^{R} r^2 U W dr}{\rho\pi R^2 U_m^2 R} \qquad\qquad \text{Gl. 4}$$

wobei

$M_{mn}$      der Drehimpuls des Mediums,
$J_{axial}$      der Longitudinalimpuls des Mediums,
$\rho$      die Dichte des Mediums,
$U$      die axiale Geschwindigkeitskomponente des Mediums,
$W$      die tangentiale Geschwindigkeitskomponente des Mediums und
$r$      der radiale Abstand von der Meßrohrachse

ist. Dieser theoretische Ansatz geht von einer exakten Berücksichtigung des Verhältnisses von Drehimpuls und Longitudinalimpuls des strömenden Mediums aus.

Gl. 4 läßt sich nun durch die Verwendung der sogenannten "solid body"-Näherung vereinfachen, die lautet:

$$W = r \cdot \omega \qquad\qquad \text{Gl. 5}$$

wobei

$\omega$      die Winkelgeschwindigkeit ist.

Die "solid body"-Näherung geht davon aus, daß sich das Medium mit gleichmäßiger Winkelgeschwindigkeit - wie ein fester Körper - dreht.

Mit der erwähnten Näherung gilt für die Wirbelintensität folgendes:

$$S = \frac{\omega \cdot R}{2 U_m} \qquad\qquad \text{Gl. 6}$$

Unter der Voraussetzung, daß die Meßpfade über den Querschnitt des Meßrohres symmetrisch angeordnet sind und die Einlaufstrecke vor dem Meßrohr genügend lang ist, ist das Strömungsprofil der axialen Geschwindigkeiten und der tangentialen Geschwindigkeiten axial symmetrisch. Dieser Fall ist in Fig. 2 dargestellt. Unter der Annahme, daß zumindest die axialen Geschwindigkeiten axial symmetrisch sind, gilt für die Summe der gemessenen Laufzeitunterschiede entlang zweier Meßpfade mit voneinander in Bezug auf die Meßrohrachse abweichenden Radialkomponenten:

$$\Delta T_{links} + \Delta T_{rechts} = \frac{4\cos\theta}{c^2}\int\limits_{0}^{L_i} U dl_i + \frac{2\sin\theta}{c^2}\int\limits_{0}^{L_i}(W_{rechts} - W_{links})dl_i \qquad\qquad \text{Gl. 7}$$

wobei

$\Delta T_{links}$ und $\Delta T_{rechts}$      die Laufzeitunterschiede in der linken und in der rechten Hälfte des Meßrohres entlang zweier Meßpfade mit von einander abweichenden Radialkomponenten in bezug auf die Meß rohrachse sind,
$c$      die Ultraschallgeschwindigkeit in dem strömenden Medium,
$\theta$      der Neigungswinkel der Meßpfade zur Meßrohrachse und
$L_i$      die Länge des i-ten Meßpfades ist.

Für den eben angesprochenen und in Fig. 2 dargestellten Fall, daß der Wirbel symmetrisch ist, gilt:

$$W_{rechts} = W_{links} \qquad \text{Gl. 8}$$

wobei

$W_{rechts}$ bzw. $W_{links}$ die Tangentialkomponenten der Geschwindigkeit des strömenden Mediums in der linken bzw. rechten Hälfte des Meßrohres sind.

In diesem Fall verschwindet das zweite Integral in Gl. 7. Das zweite Integral in Gl. 7 ist somit ein Maß für die Unsymmetrie des Wirbels.

Für die Differenz der Laufzeitunterschiede entlang zweier in der rechten und in der linken Hälfte des Meßrohres verlaufender Meßpfade mit voneinander in Bezug auf die Meßrohrachse abweichenden Radialkomponenten gilt:

$$\Delta T_{rechts} - \Delta T_{links} = \frac{2\sin\theta}{c^2} \int_0^{L_i} (W_{rechts} + W_{links})\,dl_i \qquad \text{Gl. 9}$$

Somit gilt für das Verhältnis der Differenzen der Laufzeitunterschiede und der Summen der Laufzeitunterschiede, also der Gl. 9 und 7:

$$\frac{\Delta T_{rechts} - \Delta T_{links}}{\Delta T_{rechts} + \Delta T_{links}} = \frac{2r\cdot tg\theta \int_0^{L_i} (W_{rechts} + W_{links})\,dl_t}{r\left[4\int_0^{L_i} U\,dl_i + 2tg\theta \int_0^{L_i} (W_{rechts} - W_{links})\,dl_i\right]} \qquad \text{Gl. 10}$$

Setzt man voraus, daß die Differenz zwischen $W_{rechts}$ und $W_{links}$, bei entsprechend langer Einlaufstrecke, gering ist, so gilt folgende Näherung:

$$\frac{tg\theta \int_0^{L_i} (W_{rechts} - W_{links})\,dl_i}{2\int_0^{L_i} U\,dl_i} << 1 \qquad \text{Gl. 11}$$

Es ergibt sich somit nach Einsetzen der Näherung aus Gl. 11 und der erneuten Verwendung der "solid body"-Gleichung in Gl. 10 für das Verhältnis aus der Differenz der Laufzeitdifferenzen und der Summe der Laufzeitdifferenzen folgendes:

$$\frac{\Delta T_{rechts} - \Delta T_{links}}{\Delta T_{rechts} + \Delta T_{links}} = \frac{R\omega}{4U}tg\theta = S\cdot tg\theta \qquad \text{Gl. 12}$$

Man erkennt also, daß die über das Verhältnis aus Drehimpuls und Longitudinalimpuls definierte Wirbelintensität in erster Näherung dem Verhältnis aus der Differenz der Laufzeitdifferenzen und der Summe der Laufzeitdifferenzen mit einem konstanten Faktor entspricht. Da außerdem gilt:

$$\frac{(\Delta T_{rechts} - \Delta T_{links})}{(\Delta T_{rechts} + \Delta T_{links})} = \frac{(\Delta U_{m_{rechts}} - \Delta U_{m_{links}})}{(\Delta U_{m_{rechts}} + \Delta U_{m_{links}})} \qquad \text{Gl. 13}$$

läßt sich also die Wirbelintensität aus den Geschwindigkeiten des Mediums entlang mindestens zweier Meßpfade mit voneinander abweichenden Radialkomponenten in bezug auf die Meßrohrachse durchgängig messen und zur Korrektur des Meßwertes für die Durchflußmenge heranziehen. Asymmetrien werden in Gl. 13 über die Summe der Laufzeitdifferenzen ($\Delta T_{rechts} + \Delta T_{links}$) berücksichtigt.

Gl. 13 läßt sich, wie bereits erwähnt, auch dahingehend weiterbilden, daß nicht nur eine Differenz der Geschwindigkeiten des Mediums entlang zweier Meßpfade mit in bezug auf die Meßrohrachse voneinander abweichenden Radialkomponenten berücksichtigt wird, sondern darüber hinaus die Summe zweier oder mehrerer Differenzen bei der Bestimmung des Drehimpulses des Mediums berücksichtigt wird. Darüber hinaus wird die Meßgenauigkeit für die Wirbelintensität weiter dadurch erhöht, daß auch der Longitudinalimpuls des Mediums anhand der Summe der Geschwindigkeiten des Mediums entlang mehrerer Meßpfade bestimmt wird. Denkbar sind beispielsweise folgende Konstellationen. Bei zwei Meßpfaden bietet sich Gl. 13 in unveränderter Form an. Bei drei Meßpfaden kann die Wirbelintensität beispielsweise anhand des Verhältnisses der Differenzen der Geschwindigkeiten zwischen den Meßpfaden 1 und 3 oder 1 und 2 oder 2 und 3 und der Summe der Geschwindigkeiten auf den Meßpfaden 1 bis 3 bestimmt werden. Sind innerhalb des Meßrohres vier Meßpfade vorgesehen, so läßt sich die Wirbelintensität beispielsweise anhand der Differenzen der Geschwindigkeiten entlang der Meßpfade 2 und 4 oder 1 und 4 oder 2 und 3, dividiert durch die Summe der Geschwindigkeiten entlang der Meßpfade 1 bis 4, bestimmen. Alternativ kann die Wirbelintensität beispielsweise aus der Summe der Differenzen der Geschwindigkeiten entlang der Meßpfade 2 und 4 und 1 und 4, dividiert durch die Summe der Geschwindigkeiten entlang der Meßpfade 1 bis 4, bestimmt werden. Denkbar sind auch Anordnungen mit fünf Meßpfaden, bei denen die Wirbelintensität beispielsweise durch die Summe der Differenzen der Geschwindigkeiten entlang der Meßpfade 2 und 4 und 1 und 5, geteilt durch die Summe der Geschwindigkeiten entlang der Meßpfade 1 bis 5, bestimmt werden. Es reicht jedoch ebenfalls aus, die Wirbelintensität anhand des Quotienten aus der Differenz der Geschwindigkeiten entlang der Meßpfade 1 und 5 und der Summe der Geschwindigkeiten entlang der Meßpfade 1 bis 5 zu bestimmen. Alternativ zu den hier aufgezählten Möglichkeiten ergeben sich eine Vielzahl von denkbaren Gleichungen zur erfindungsgemäßen Bestimmung der Wirbelintensität.

Voraussetzung dafür, daß der Quotient aus den Differenzen und den Summen der Geschwindigkeiten des Mediums entlang zweier Meßpfade zur Wirbelintensität proportional ist, ist die Tatsache, daß die Radialkomponenten der beiden Meßpfade in bezug auf die Meßrohrachse voneinander abweichen. Mit der Radialkomponente des Meßpfades in bezug auf die Meßrohrachse ist die Winkelkoordinate eines in Meßpfadrichtung weisenden Vektors in einem zylindrischen Koordinatensystem mit der Meßrohrachse als Mittelachse gemeint. Die Abweichung muß entweder im Absolutwert oder im Vorzeichen der Radialkomponente verwirklicht sein. Für den Fall, daß die Radialkomponenten übereinstimmen, liefert die Differenz der Laufzeitdifferenzen lediglich ein Maß für die Asymmetrie des Wirbels, so daß in diesem Fall Gl. 13 kein Maß für die Wirbelintensität darstellen würde.

Die bekannten Vorrichtungen zur Verwirklichung von Ultraschall-Durchflußmeßverfahren sind so ausgebildet, daß die Meßpfade mehr oder minder gleichmäßig über den Meßrohrquerschnitt verteilt in einer gemeinsamen, gegenüber der Meßrohrachse geneigten Ebene verlaufen. Bei diesen bekannten Vorrichtungen erfüllen jeweils zwei auf unterschiedlichen Seiten der Meßrohrachse verlaufende Meßpfade die Forderung nach voneinander abweichenden Radialkomponenten in Bezug auf die Meßrohrachse zur Verwirklichung des erfindungsgemäßen Verfahrens.

Zur Korrektur des Meßwertes für die Durchflußmenge bzw. die über den Gesamtquerschnitt des Meßrohres gemittelte Geschwindigkeit gemäß Gl. 3 fehlt nunmehr noch die Funktion $\delta(S)$. Gemäß einer Weiterbildung des erfindungsgemäßen Verfahrens wird diese Funktion $\delta(S)$ empirisch ermittelt, da sie sich einem analytischen Ansatz weitgehend verschließt.

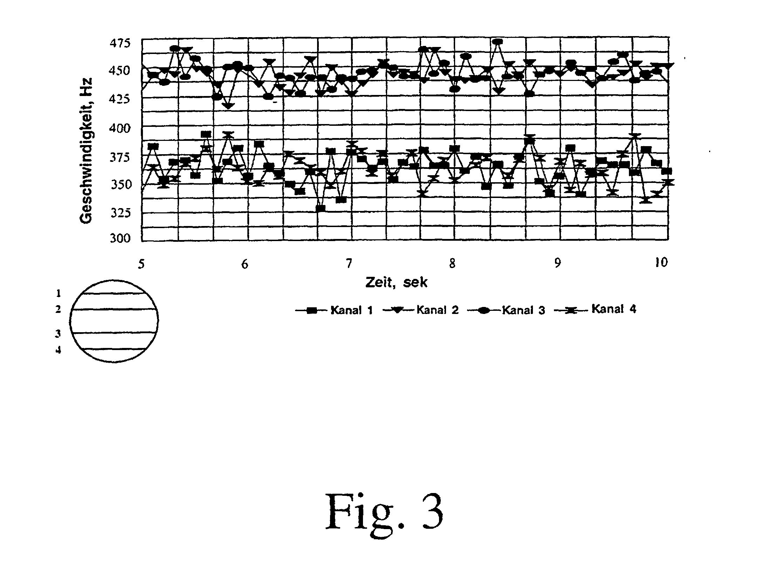

Der besondere Vorteil des vorstehend mathematisch erläuterten erfindungsgemäßen Verfahrens besteht darin, die Querempfindlichkeit der Korrektur des Meßwertes für die Durchflußmenge in Abhängigkeit von der Wirbelintensität gegenüber Störungen der Strömungsverhältnisse durch Druckwellen zu verringern. In Fig. 3 sind die Geschwindigkeiten des Mediums entlang von vier Meßpfaden dargestellt, wobei sich die Lage der Meßpfade aus dem links unterhalb des Diagramms abgebildeten Querschnitt durch das Meßrohr ergibt. Die in Fig. 3 dargestellten Meßwerte ergeben sich bei Messungen innerhalb eines Mediums, dessen Strömungsverhältnisse ausschließlich durch Druckwellen gestört sind. Man erkennt hier ohne weiteres, daß die Schwankungen in den Geschwindigkeiten entlang der Meßpfade bedingt durch Druckwellen ohne weiteres mit dem Einfluß von Wirbeln verwechselt werden können. Es treten zufällig verteilt relativ hohe Differenzen der Geschwindigkeiten entlang der Meßpfade mit voneinander abweichenden Radialkomponenten, beispielsweise der Meßpfade 1 und 4 oder 2 und 3 auf, die bei dem aus dem Stand der Technik bekannten Verfahren, von dem die Erfindung ausgeht, dahingehend interpretiert werden, daß die Strömungsverhältnisse durch Wirbel gestört sind und dementsprechend die Meßwerte für die Durchflußmenge zu korrigieren sind.

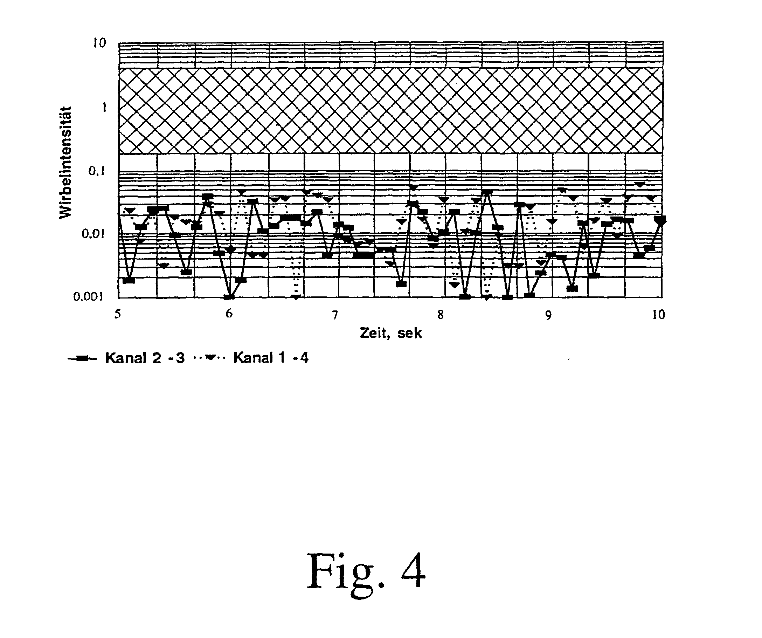

In Fig. 4 ist weiter der Einfluß von Druckwellen und der Einfluß von Wirbeln auf die erfindungsgemäß bestimmte Wirbelintensität dargestellt. Hier erkennt man deutlich, daß der ausführlich in Form zweier Meßkurven dargestellte Einfluß von Druckwellen auf die erfindungsgemäß bestimmte Wirbelintensität um etwa eine Größenordnung unter dem diagonal schraffierten Bereich des Einflusses von Wirbeln innerhalb des Mediums auf die erfindungsgemäß bestimmte Wirbelintensität liegt. Aus Fig. 4 ist also besonders deutlich die bereits mehrfache erwähnte deutlich reduzierte Querempfindlichkeit der erfindungsgemäß definierten Wirbelintensität gegenüber Druckwellen ersichtlich.

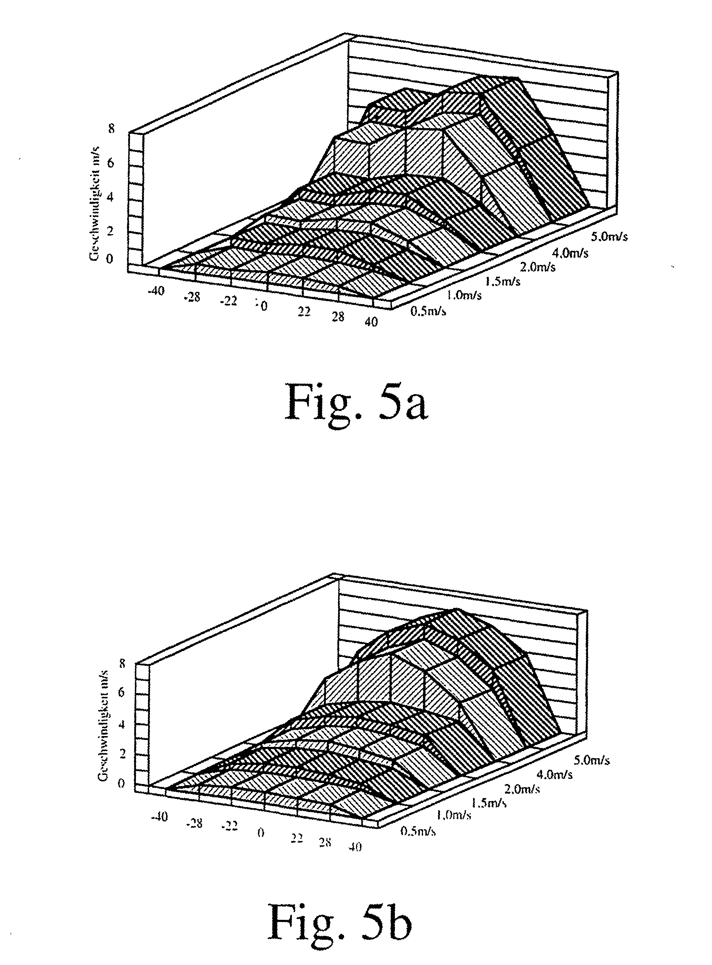

Fig. 5 a) zeigt ein unkorrigiertes Strömungsprofil, aufgenommen mit fünf Ultraschallwandlerpaaren unter deutlichem Wirbeleinfluß. Demgegenüber zeigt Fig. 5b) dasselbe Strömungsprofil, korrigiert anhand der erfindungsgemäß bestimmten Wirbelintensität. Man erkennt deutlich, daß das in Fig. 5a) dargestellte Strömungsprofil sehr gut symmetrisiert worden ist. Diese Symmetrisierung ist gleichbedeutend mit einer deutlich verbesserten Meßgenauigkeit für den Meßwert der Durchflußmenge.

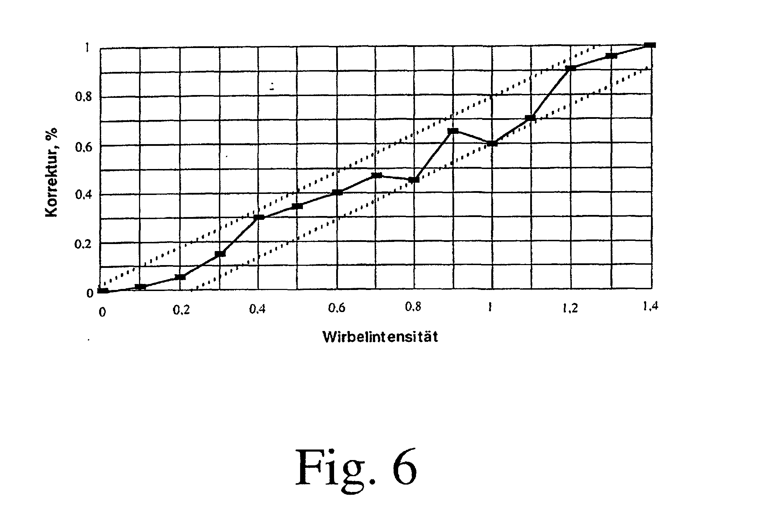

Fig. 6 zeigt schließlich mit einer durchgezogenen Linie den Verlauf einer empirisch ermittelten Fehlerkurve für $\delta(S)$ einer Vorrichtung zur Verwirklichung des erfindungsgemäßen Verfahrens. Die gestrichelten Linien in Fig. 6 schließen das Band ein, innerhalb dessen die Fehlerkurven für verschiedene Ausführungen einer Vorrichtung zur Verwirklichung des erfindungsgemäßen Verfahrens verlaufen.

Abschließend soll noch einmal darauf hingewiesen werden, daß auch das erfindungsgemäße Verfahren dann besonders gute Ergebnisse liefert, wenn das Meßrohr erst in einem Abstand von störungsverursachenden Gegebenheiten in der angrenzenden Rohrleitung eingebaut wird, in dem die individuellen Störkomponenten abgeklungen sind. In der bereits zitierten Literaturstelle "Turbulent Pipe Flow with Swirl", aaO, wird dieses Gebiet als Ausdämpfungsgebiet gegenüber dem Eingangsgebiet unmittelbar hinter der die Störung verursachenden Gegebenheit bezeichnet.

**Patentansprüche**

1. Ultraschall-Durchflußmeßverfahren, mit Hilfe eines Meßrohres und mindestens zweier am Meßrohr angeordneter, jeweils einen Meßpfad bildender Ultraschallwandlerpaare, wobei der Meßwert für die Durchflußmenge eines durch das Meßrohr strömenden Mediums aus den Laufzeitdifferenzen entlang der jeweiligen Meßpfade bestimmt wird, **dadurch gekennzeichnet, daß** in Längsrichtung des Meßrohrs gesehen je ein Meßpfad in der rechten bzw. in der linken Hälfte des Meßrohres vorgesehen ist, wobei die Projektionen der Meßpfade auf den Querschnitt des Meßrohrs zueinander symmetrisch verlaufen, und die Wirbelintensität zumindest näherungsweise über das Verhältnis zwischen Drehimpuls und Longitudinalimpuls des Mediums bestimmt wird, indem das Verhältnis aus der Differenz der Laufzeitdifferenzen entlang der jeweiligen Meßpfade und der Summe der Laufzeitdifferenzen entlang der jeweiligen Meßpfade bestimmt wird und der Meßwert für die Durchflußmenge anhand der derart bestimmten Wirbelintensität korrigiert wird.

2. Verfahren nach Anspruch 1, **dadurch gekennzeichnet, daß** die Korrektur des Meßwertes für die Durchflußmenge anhand der Wirbelintensität unter Verwendung einer auf empirischen Daten beruhenden Fehlerkurve durchgeführt wird.

**Claims**

1. Ultrasound flow rate measurement method by means of a measuring tube and at least two pairs of ultrasound transducers located on the measuring tube, in each case forming a measuring path, wherein the measured value for the rate of flow of a medium flowing through the measuring tube is determined from the differences in propagation time along the corresponding measuring path, **characterized in that** a measuring path is provided longitudinally to the measuring tube in the right or left half of the measuring tube, wherein the projection of measuring paths onto the cross-section of a measuring tube run symmetrically to one another and the eddy intensity is determined at least approximately from the ratio between the angular momentum and axial momentum in which the ratio of the differences of propagation time differences along the measuring paths and the sum of the differences in propagation time along the measuring paths is determined and the measured value for the rate of flow is corrected by the eddy intensity.

2. Method according to claim 1, **characterized in that** the correction of the measured value for the rate of flow according to the eddy intensity is carried out with the use of an error curve based on empirical data.

**Revendications**

1.  Procédé de mesure de débit par ultrasons, à l'aide d'un tube de mesure et d'au moins deux paires de redresseurs d'ultrasons disposés sur le tube de mesure, formant respectivement une piste de mesure, la valeur de mesure pour la quantité débitée d'un fluide s'écoulant à travers le tube de mesure étant définie à partir des différences de temps de circulation le long des pistes de mesure respectives,
    **caractérisé en ce que**,
    vu dans le sens longitudinal du tube de mesure, à chaque fois une piste de mesure est prévue dans la moitié droite ou gauche du tube de mesure, les projections des pistes de mesure sur la section transversale du tube de mesure s'étendant symétriquement l'une par rapport à l'autre, et l'intensité des tourbillons étant déterminée du moins approximativement par le rapport entre l'impulsion de rotation et l'impulsion longitudinale du fluide en définissant le rapport de la différence des écarts de temps de circulation le long des pistes de mesure respectives et de la somme des écarts de temps de circulation le long des pistes de mesure respectives et la valeur de mesure pour la quantité débitée étant corrigée en se basant sur l'intensité de tourbillons ainsi définie.

2.  Procédé selon la revendication 1, **caractérisé en ce que** la correction de la valeur de mesure pour la quantité débitée est réalisée en se basant sur l'intensité des tourbillons en utilisant une courbe d'erreur reposant sur des données empiriques.

Fig. 1

Fig. 2

Fig. 3

11

**Fig. 4**

Fig. 5a

Fig. 5b

Fig. 6